(19) Europäisches Patentamt
European Patent Office
Office européen des brevets

(11) **EP 1 464 918 B1**

(12) **EUROPÄISCHE PATENTSCHRIFT**

(45) Veröffentlichungstag und Bekanntmachung des Hinweises auf die Patenterteilung:
**16.11.2016   Patentblatt 2016/46**

(51) Int Cl.:
*G01B 7/00* *(2006.01)*       *G01D 5/14* *(2006.01)*

(21) Anmeldenummer: **04003793.9**

(22) Anmeldetag: **19.02.2004**

(54) **Verfahren und Vorrichtung zur Messung der Position eines Magneten relativ zu einem Messort**

Method and apparatus for measuring the position of a magnet relative to a measuring place

Procédé et appareil pour mesurer la position d'un aimant par rapport à une place de mesure

(84) Benannte Vertragsstaaten:
**AT BE BG CH CY CZ DE DK EE ES FI FR GB GR HU IE IT LI LU MC NL PT RO SE SI SK TR**

(30) Priorität: **01.04.2003   DE 10314838**

(43) Veröffentlichungstag der Anmeldung:
**06.10.2004   Patentblatt 2004/41**

(73) Patentinhaber: **Seuffer GmbH & Co. KG**
**75365 Calw (DE)**

(72) Erfinder:
• **Schaller, Martin**
**75196 Remchingen (DE)**
• **Bass, Wolfgang**
**74626 Bretzfeld-Adolzfurt (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
**US-A- 5 622 169       US-A- 5 762 064**
**US-A- 6 129 668       US-B1- 6 385 482**

**Beschreibung**

Die Erfindung betrifft ein Verfahren und eine Vorrichtung zur Messung der Position, welche ein Magnet und ein Messort, welcher im Magnetfeld des Magneten liegt, zueinander haben, wobei der Magnet oder der Messort eine vorbestimmte ortsfeste Position bei der Messung einnimmt.

Aus DE 196 07 199 C2 ist es bekannt, die Winkelstellung eines Magnetsensors gegenüber einem Permanentmagneten zu erfassen und ein hierzu proportionales Signal zu liefern.

Aus US 5,694,040 ist es bekannt, mit Hilfe von zwei Hall-Generatoren die Größe einer Magnetfeldkomponenten senkrecht zur Sensorebene zu erfassen.

Aus US 6,304,082 B1 ist ein mehrachsiges Magnetometer zur Messung der magnetischen Feldstärke in drei orthogonalen Achsen (X, Y, Z) bekannt.

Aus EP 1 082 619 B1 ist ein Magnetfeldsensor bekannt, mit dem in zwei aufeinander senkrechten Achsen das Magnetfeld erfasst werden kann.

Des Weiteren offenbart die Druckschrift US 5 622 169 eine Vorrichtung und ein Verfahren zum Lokalisieren eines medizinischen Schlauchs im Körper eines Patienten, wobei an dem medizinischen Schlauch ein Permanentmagnet angeordnet ist, der ein starkes Magnetfeld aufweist. Eine Sensoreinrichtung mit vorzugsweise zwei Magnetspulen wird in die Nähe des zu überprüfenden Körpers gebracht und erfasst das mit dem Permanentmagneten in Verbindung stehende statische Magnetfeld. Hierbei werden insbesondere die Ausgangssignale der beiden Sensorspulen ausgewertet, und es werden Differenzsignale der beiden Sensorsignale gebildet. Mittels des Differenzsignals kann weitgehend der Einfluss des Erdmagnetfelds beseitigt oder zumindest vermindert werden. Des Weiteren können Magnetsensoren derart ausgebildet sein, dass sie aus drei zueinander jeweils senkrecht angeordneten Magnetspulen bestehen, um eine Messung an zwei Stellen in jeweils sämtlichen Raumrichtungen durchzuführen.

Die Druckschrift US 6 129 668 offenbart ein System und ein Verfahren zur Bestimmung des Ortes und der Orientierung einer medizinischen Einrichtung zur Daueranwendung, wobei mit der medizinischen Einrichtung ein Magnet verbunden ist. Innerhalb des Patienten nach dem Einsetzen der medizinischen Einrichtung werden drei oder mehr Sätze von Magnetsensoren verwendet, bei denen die Sensorelemente in einer bekannten Weise angeordnet sind. Jedes Sensorelement erfasst die Stärke des durch den Magneten erzeugten Magnetfelds in dem dreidimensionalen Raum und gibt ein entsprechendes Sensorsignal ab. Insbesondere kann auch der magnetische Feldgradient bestimmt werden. Ein iterativer Prozess dient zur Bestimmung des tatsächlichen Orts und der Orientierung des Magneten. Vorausgesagte Magnetfeldwerte werden mit tatsächlich gemessenen Werten verglichen und es wird somit auf ein Erfassungsergebnis geschlossen. Mit weiteren Schritten wird dieses Erfassungsergebnis verfeinert. Die weiteren Schritte erfolgen, bis ein gewünschter Grad an Abweichungen erreicht ist.

Die Druckschrift US 5 762 064 offenbart ein medizinisches Magnetpositionierungssystem und ein Verfahren zur Bestimmung der Position eines Magneten innerhalb eines Körpers, wobei zumindest zwei zueinander beabstandete Magnetsensoren an dem Körper in der Nähe einer gewünschten Position des Magneten angeordnet sind. Das dreidimensionale Magnetfeld des Magneten wird mittels der zumindest zwei Magnetsensoren erfasst und es kann aus den zumindest zwei Magnetsensoren nach einer entsprechenden Auswertung der gewünschte Ort des Magneten bestimmt werden. Vorzugsweise sind die Magnetsensoren triaxial messende Sensoren, und es wird sowohl der Ort als auch die räumliche Orientierung des Magneten bezüglich der Position der Magnetsensoren bestimmt.

Schließlich offenbart die Druckschrift US 6 385 482 B1 eine Vorrichtung und ein Verfahren zur Bestimmung einer Position, wobei eine Signalemittereinheit vorzugsweise innerhalb eines Körpers angeordnet ist, beispielsweise in der Nähe eines zu untersuchenden Teils, wie eines Tumors. Die von der Signalemittereinheit abgegebenen Signale können außerhalb des Körpers mittels entsprechender Empfängereinrichtungen erfasst werden, sodass in exakter Weise die gewünschte Position, beispielsweise des Tumors, erfasst werden kann.

Der vorliegenden Erfindung liegt demgegenüber die Aufgabe zugrunde, ein eingangs genanntes Verfahren und eine eingangs genannte Vorrichtung derart auszugestalten, dass die gegenseitige räumliche Positionierung von ein Magnetfeld erzeugendem Magneten und einem im Magnetfeld liegenden Messort unbeeinflusst von Störfeldern bestimmt werden kann.

Beim Verfahren wird diese Aufgabe erfindungsgemäss durch die Merkmale des Patentanspruches 1 und bei der Vorrichtung durch die Merkmale des Patentanspruches 2 gelöst.

Bei der Erfindung wird die Magnetfeldstärke und/oder der Gradient am Messort dreidimensional, d.h. in drei orthogonalen Achsen bestimmt. Aus einer Abweichung der so dreidimensional bestimmten Magnetfeldstärke und/oder dem Gradienten von einer Referenz-Magnetfeldstärke und/oder Referenz-Magnetfeldgradienten, bei welcher bzw. bei welchem der Magnet und der Messort vorbestimmte Positionen haben, kann der Positionsmesswert für die relative Lage von Magnet und Messort zueinander gebildet werden. Der Gradient gibt die Krümmung und Richtung des Magnetfeldes am Messort wieder.

Hierzu werden dreidimensional messende Sensoren (3D-Sensoren) verwendet.

Die der Position entsprechenden Signale enthalten eine Information sowohl über den räumlichen Ort (x, y, z) als auch eine Information zur Richtung bzw. Orientierung gegenüber den drei Raumachsen (X, Y, Z).

Vorzugsweise sind wenigstens vier Magnetfeldsensoren vorgesehen, von denen jeder Magnetfeldsensor die Magnetfeldstärke dreidimensional, d.h. in den drei orthogonalen X-, Y-, Z-Achsen misst.

In einer an die Magnetfeldsensoren angeschlossenen Auswerteeinrichtung, welche bevorzugt als elektronische rechnergestützte Auswerteeinrichtung ausgebildet ist, wird aus wenigstens zwei Sensorsignalen der Differenzenquotient der Feldstärke des Magnetfeldes gebildet und aus der Abweichung dieses Differenzenquotienten von einem Referenz-Differenzenquotienten, bei welchem der Magnet und der Messort vorbestimmte Positionen einnehmen, der Positionsmesswert für die relative Lage von Magnet und Messort zueinander bestimmt. Die partiellen den jeweiligen orthogonalen Achsen in X-, Y-und Z-Richtung zugeordneten Differenzenquotienten ergeben den Gradienten des räumlich ausgedehnten Magnetfeldes am jeweiligen Messort.

Der Magnet, welcher das Magnetfeld erzeugt, kann als Permanentmagnet oder als Elektromagnet ausgebildet sein.

Bei Verwendung eines Elektromagneten kann ein moduliertes Magnetfeld erzeugt werden, wobei zur Bestimmung der relativen Position von Magnet zu Messort die am Messort gemessene Stärke und Richtung der Modulation ausgewertet werden.

Beim Messvorgang ist entweder der Magnet oder der Messort an einer vorbestimmten bekannten ortsfesten Position angeordnet. Es können somit Drehbewegungen und Translationsbewegungen sowie Kombinationen dieser Bewegungsarten und die jeweilige Ist-Position des bewegten Bauteils, insbesondere Bedienelementes, mit dem der Magnet oder Messort fest verbunden ist, in drei orthogonalen Koordinaten erfasst werden.

Vorzugsweise kann an vier bekannten bzw. bestimmten Messstellen mit dreidimensional messenden Magnetfeldsensoren der Gradient des Magnetfeldes bzw. die Magnetfeldstärken am Messort in den drei orthogonalen X-, Y-und Z-Achsen bestimmt werden. Zur Vereinfachung der Auswertung der Sensorsignale können die Magnetfeldsensoren auf einem Kreisumfang um einen den Messort bildenden Mittelpunkt angeordnet sein.

Vorzugsweise werden zur Bestimmung des Positionsmesswertes die an wenigstens zwei Messstellen vorhandenen Magnetfeldstärken mit Magnetfeldsensoren bestimmt und aus der Abweichung von den zugeordneten Referenz-Magnetfeldstärken der Positionsmesswert bestimmt. Vorzugsweise werden die Magnetfeldstärken zweier Messstellenpaare (Magnetfeldsensorpaare), die um einen gemeinsamen Mittelpunkt als Messort angeordnet sind, für die Bestimmung des Positionsmesswertes ausgewertet. Bei der Auswertung des ermittelten Magnetfeldgradienten erreicht man eine von Fremd- oder Störfeldern unbeeinflusste Messung, da diese im Wesentlichen am Messort geradlinig verlaufende Feldlinien aufweisen.

Das Verfahren und die Vorrichtung werden vorzugsweise beim berührungslosen Generieren von Stellsignalen oder Steuersignalen bei Bedienelementen, beispielsweise Schaltern und dergleichen, zum Einsatz gebracht. Auf diese Weise erreicht man eine kontaktfreie und verschleissarme Bildung von Stellsignalen oder Steuersignalen. Dabei können die Stellelemente oder Bedienelemente zur Erzeugung der Stellsignale oder Steuersignale fest mit den Magneten bei ortsfestem Messort oder fest mit dem Messort bei ortsfestem Magneten dreidimensional bewegt werden. Die von der Auswerteeinrichtung erzeugten Positionsmesssignale bilden dann die Stellsignale oder Steuersignale für die zu bedienenden Einrichtungen.

Anhand der Figuren wird die Erfindung noch näher erläutert.

Es zeigen

Fig. 1 schematisch ein Ausführungsbeispiel der Erfindung; und

Fig. 2 eine Messanordnung, welche beim Ausführungsbeispiel der Fig. 1 zur Anwendung kommt.

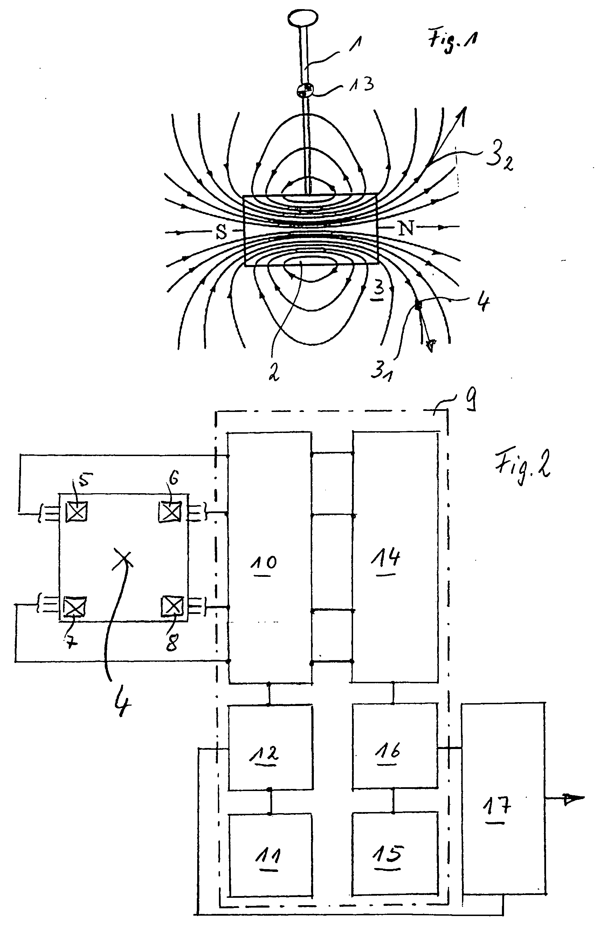

Bei dem in der Fig. 1 dargestellten Ausführungsbeispiel ist an einem Bedienelement, beispielsweise in Form eines zweiarmigen Hebels am Ende eines Hebelarmes ein Magnet 2 befestigt. Der Magnet 2, welcher ein Permanentmagnet oder Elektromagnet sein kann, bildet ein Magnetfeld 3 mit einer bestimmten Feldlinienrichtung. Die Richtung der Feldstärke stimmt in jedem Punkt des Feldes mit der Richtung der Feldlinien überein.

Im Magnetfeld ist ein Messort 4 ortsfest angeordnet. Der Messort 4 kann von vier 3-dimensional messenden Magnetfeldsensoren 5, 6, 7, 8 (Fig. 2) gebildet werden. Die Magnetfeldsensoren 5, 6, 7 und 8 sind auf einem Kreisumfang um den Messort 4, welcher den Mittelpunkt des Kreisumfanges bildet, angeordnet.

Jeder der vier Magnetfeldsensoren misst entlang dreier orthogonaler Achsen (X, Y, Z) die magnetische Feldstärke. Dreidimensional messende Magnetfeldsensoren sind bekannt (z.B. US 6,304,082 B1). Mit dem Bedienelement 1 kann der Magnet 2 in allen translatorischen und rotatorischen Freiheitsgraden bewegt werden. Das Bedienelement 1 kann beispielsweise ein Joy-Stick oder ein anderes Betätigungselement oder Stellelement sein. Vorzugsweise erfolgt die Bewegung des Magneten um einen Schwenkpunkt 13 in allen Raumrichtungen, wobei der Schwenkpunkt 13 gegebenenfalls in axialer Richtung des Bedienelementes 1 oder in einer oder mehreren bestimmten Richtungen in einer Ebene senkrecht dazu verschoben werden kann.

Die Bewegung des Magneten 2 und dessen jeweilige Position gegenüber dem ortsfesten Messort 4 wird durch zwei Paare der Magnetfeldsensoren mit jeweiliger Mitte am Messort 4, wie im Folgenden erläutert wird, erfasst.

Die Magnetfeldsensoren 5, 6, 7, 8 sind an eine Auswerteeinrichtung 9 angeschlossen, wobei die Komponenten der Auswerteeinrichtung 9 und die Magnetfeldsensoren vorzugsweise auf einem Chip als integrierte Schaltung, z.B. ASIC vorgesehen sind.

Die Auswerteeinrichtung 9, welche vorzugsweise als elektronische Auswerteeinrichtung ausgebildet ist, beinhaltet einen an die Magnetfeldsensoren 5, 6, 7, 8 angeschlossenen Istwert-Bildner 10. Dieser bildet aus den von den Magnetfeldsensoren erhaltenen Signalen die Ist-Werte der Magnetfeldstärke in drei orthogonalen Achsen (X, Y, Z) für jeden der Magnetfeldsensoren 5, 6, 7 und 8. Diese Ist-Werte werden mit Referenzwerten der Magnetfeldstärken in den jeweiligen X-, Y- und Z-Achsen verglichen. Die Referenzfeldstärken sind in einem Referenzspeicher 11 gespeichert. Die Referenzfeldstärken können auch aus einem mathematischen Modell bestimmt werden. Die Referenzfeldstärken sind die Feldstärken an den Orten der Magnetfeldsensoren 5, 6, 7 und 8, wenn das Magnetfeld 3 und damit der Magnet 2 sowie das Bedienelement 1 sich in einer Referenz(Null)-Position befindet. Wenn bei Betätigung des Bedienelementes 1 der Magnet 2 aus dieser Referenz(Null)-Position bewegt wird, ändern sich die von den

Magnetfeldsensoren dreidimensional gemessenen Feldstärken. Diese Feldstärken werden, wie schon erwähnt, als Ist-Feldstärken vom Istwert-Bildner erfasst und mit den im Referenzspeicher 11 gespeicherten Referenzfeldstärken in einem Vergleicher 12 verglichen.

Die im Vergleicher 12 festgestellte Abweichung der Ist-Werte der Magnetfeldstärken von den Referenz-Magnetfeldstärken sind ein Mass für die Positionsabweichung des Magneten 2 aus der Referenz(Null)-Position. Diese Abweichung gibt ferner die genaue Ist-Position des Magneten 2 und damit des Bedienelementes 1 an. Für diese Positionsbestimmung können die Magnetfeldstärken in den drei orthogonalen Achsen (X, Y, Z) eines einzelnen Magnetfeldsensors oder von mehreren der vier Magnetfeldsensoren erfasst und ausgewertet werden.

Ferner können die Feldstärkemesssignale zweier Magnetfeldsensoren zur Bestimmung eines Gradienten des Magnetfeldes 3 ausgewertet werden. Hierzu wird in einem Differentiator 14 der Differenzenquotient, welcher ein Mass für die Krümmung und Richtung des Magnetfeldes am Messort 4 ist, gebildet. Hierzu werden die Messsignale von wenigstens zwei diametral zum Messort 4 liegenden Magnetfeldsensoren verwendet. Beispielsweise werden die Messsignale der beiden Magnetfeldsensoren 5 und 8 oder der beiden Magnetfeldsensoren 6 und 7 verwendet. Es ist jedoch auch möglich, die Messsignale der beiden Sensorpaare 5, 8 und 6, 7 auszuwerten und den Gradienten (Richtung und Krümmung) des Magnetfeldes mit der jeweiligen Feldstärke $B_{5,6,7,8}(X, Y, Z)$ in den drei orthogonalen Achsen an den Messstellen $(x, y, z)_{5,6,7,8}$, an denen die in den drei orthogonalen Achsen messenden Magnetfeldsensoren 5, 6, 7, 8 liegen, für den in der Mitte dieser Sensorpaare liegenden Messort 4 zu erhalten. In den drei orthogonalen Achsen ergibt sich der Gradient aus den entsprechenden partiellen Differenzenquotienten nach folgender allgemeiner Beziehung:

$$\text{Grad} = \frac{B_{5,6}(X, Y, Z) - B_{8,7}(X, Y, Z)}{(x, y, z)_{5,6} - (x, y, z)_{8,7}}$$

Diese Ist-Werte für den Gradienten werden mit einem Referenzgradienten, der in einem Referenzgradientenspeicher 15 gespeichert ist, verglichen. Der Referenzgradient im Speicher 15 entspricht dem Referenzgradienten, der am Messort 4 mittels der Magnetfeldsensoren 5, 6, 7 und 8 bei einer Ausgangsposition (Referenz- bzw. Null-Position) des Bedienelementes 1 und des Magneten 2 ermittelt wurde. In einem Vergleicher 16 wird die Abweichung des Ist-Wertes des Magnetfeldgradienten vom Referenzwert des Magnetfeldgradienten ermittelt, wobei die Abweichung in den drei orthogonalen Achsen ein Maß für die räumliche Position des Magneten 2 und damit des Bedienelementes 1 ist.

Bei einer Veränderung der Position des Bedienelementes 1 und damit des Magnetfeldes 3 ändern sich die Messwerte sowohl für die Feldstärken, welche im Istwert-Bildner 10 erfasst werden, als auch für den Gradienten, welcher im Gradientenbildner 14 erfasst wird, in den drei orthogonalen X-, Y- und Z-Achsen. Bei der in Fig. 1 dargestellten Positionierung wird an dem mit $3_1$ bezeichneten Magnetfeldbereich am ortsfesten Messort 4 gemessen.

Bei einer Veränderung der Position des Bedienelementes 1 und damit des Magnetfeldes 3 gelangt beispielsweise der mit $3_2$ bezeichnete Magnetfeldbereich an den ortsfesten Messort 4. Die Richtungen des Magnetfeldes sind schematisch, d.h. lediglich in der Zeichenebene, mit tangential zu den Feldlinien verlaufenden Pfeilen gekennzeichnet.

Bei der Erläuterung des Ausführungsbeispiels der Fig. 1 wird der Magnet 2 vom Bedienelement 1 bewegt. Es ist jedoch auch möglich, den Magneten 2 ortsfest anzuordnen und den Messort 4, insbesondere den Chip, auf welchem sich die dreidimensional messenden Magnetfeldsensoren 5, 6, 7 und 8 befinden, durch das Bedienelement 1 im Magnetfeld 3 zu bewegen.

Die Signale der Vergleicher 12 und/oder 16, welche proportional der jeweiligen relativen Positionierung von Messort 4 und Magnet 2 bzw. Bedienelement 1 sind, werden an eine Steuereinrichtung 17 weitergeleitet, durch welche in Abhängigkeit von diesen Positionssignalen, die Steuerung einer nicht näher dargestellten Einrichtung erfolgt. Die beschriebene Erfindung eignet sich zur Steuerung physikalischer Größen in allen Bereichen der Technik.

Bei der Auswertung des Magnetfeldgradienten in den drei orthogonalen Achsen ergibt sich noch der Vorteil, dass äußere Störfelder, deren Feldlinien im wesentlichen geradlinig verlaufen, keinen Einfluss auf die aus den Magnetfeldgradienten abgeleiteten Positionssignalen haben. Auf diese Weise erreicht man eine Unterdrückung von magnetischen Fremdfeldern bzw. Störfeldern.

Wenn der Magnet 2 als Elektromagnet ausgebildet ist, kann ein moduliertes Magnetfeld 3 erzeugt werden. Aus der am Messort gemessenen Stärke und Richtung der Modulation oder der Änderung der Modulation der gemessenen Ist-Werte der Magnetfeldstärken in den drei orthogonalen Achsen gegenüber der entsprechenden Referenzmodulation kann ebenfalls ein der Position des Magnetfeldes bzw. des Magneten 1 gegenüber dem Messort 4 entsprechendes Positionssignal gebildet werden. Bei Anwendung der Erfindung in einem Elektromotor kann mit Hilfe der dreidimensionalen Messung der Magnetfeldstärke die Rotorposition im Elektromotor kontinuierlich bestimmt werden. Ferner kann die Position von durch Elektromagnete bewegte Teile in Relais, Öffnern und dergleichen bestimmt werden.

**[Bezugszeichenliste]**

| 1 | Bedienelement |
|---|---|
| 2 | Magnet |
| 3 | Magnetfeld |
| 4 | Messort |
| 5 | 3D-Magnetfeldsensoren |
| 6 | 3D-Magnetfeldsensoren |
| 7 | 3D-Magnetfeldsensoren |
| 8 | 3D-Magnetfeldsensoren |
| 9 | Auswerteeinrichtung |
| 10 | Istwert-Bildner |
| 11 | Referenzspeicher |
| 12 | Vergleicher |
| 13 | Schwenkpunkt |
| 14 | Gradientbildner |
| 15 | Referenzgradientenspeicher |
| 16 | Gradientenvergleicher |
| 17 | Steuereinrichtung |

**Patentansprüche**

1. Verfahren zur Messung der Position, die ein Magnet gegenüber einem im Magnetfeld des Magneten angeordneten Messort aufweist, wobei am Messort in drei orthogonalen Achsen (x, y, z) mittels dreidimensional messender Magnetfeldsensoren (5, 6, 7, 8) die Magnetfeldstärken gemessen werden, und der Magnet oder der Messort eine vorbestimmte Position bei der Messung aufweist,
wobei
am Messort an wenigstens zwei Messstellenpaaren, die auf einem Kreisumfang liegen, die Magnetfeldstärken jeweils in den drei orthogonalen Achsen gemessen werden und die gemessenen Magnetfeldstärken zur Bestimmung der Position des Magneten in Bezug auf eine Referenzposition des Magneten ausgewertet werden,
der Messort im Mittelpunkt des Kreisumfangs liegt, und wobei
aus den Messwerten der Magnetfeldstärken jeweils zweier Magnetfeldsensoren ein Differenzenquotient der Magnetfeldstärken gebildet wird und aus einer Abweichung des Differenzenquotienten von einem gespeicherten Referenz-Differenzquotienten ein Positionsmesswert für die relative Lage von Magnet und Messort bestimmt wird.

2. Vorrichtung zur Messung der Position, die ein Magnet (2) gegenüber einem im Magnetfeld des Magneten vorgesehenen Messort (4) aufweist, wobei der Magnet oder der Messort eine vorbestimmte Position bei der Messung hat,
mit zumindest zwei am Messort angeordneten und die Magnetfeldstärke in drei orthogonalen Achsen (x, y, z) messenden Magnetfeldsensorpaaren (5, 6, 7, 8),
mit einer an die Magnetfeldsensoren der Magnetfeldsensorpaare angeschlossenen Auswerteeinrichtung (9) zur Bestimmung der relativen Position zwischen dem Magneten und dem Messort aus den Messsignalen der Magnetfeldsensoren,
wobei die zumindest zwei Magnetfeldsensorpaare (5, 6, 7, 8) auf einem Kreisumfang angeordnet sind, dessen Mittelpunkt der Messort (4) ist und die gemeinsame Mitte der zumindest zwei Magnetfeldsensorpaare bildet, und die Auswerteeinrichtung (9) einen Differenziator (14) aufweist zur Bildung eines Differenzenquotienten aus zumindest zwei gemessenen Magnetfeldstärken der Magnetfeldsensoren, und wobei die Auswerteeinrichtung (9) zur Bildung eines Positionsmesswerts für die relative Lage des Magneten und des Messorts in Bezug auf eine Referenzposition des Magneten aus einer Abweichung des Differenzenquotienten von einem gespeicherten Referenz-Differenzenquotienten eingerichtet ist.

3. Verwendung eines Verfahrens nach Anspruch 1 und einer Vorrichtung nach Anspruch 2 zur Steuerung einer physikalischen Größe in Abhängigkeit von dem mit dem Verfahren und/oder der Vorrichtung gebildeten Positionsmesswert, der die relative Lage des Magneten und des Messorts angibt.

**Claims**

1. Method for measuring the position of a magnet relative to a measuring location arranged in the magnetic field of the magnet, the magnetic field strengths being measured at the measuring location in three orthogonal axes (x, y, z) using magnetic field sensors (5, 6, 7, 8) which measure in three dimensions, and the magnet or the measuring location having a predetermined position during the measurement, wherein the magnetic field strengths are measured in each of the three orthogonal axes at the measuring location at at least two measuring point pairs which lie on a circumference, and the measured magnetic field strengths are analysed in order to determine the position of the magnet with respect to a reference position of the magnet, the measuring location lying at the centre of the circumference, and wherein a difference quotient of the magnetic field strengths is generated from the measured values of the magnetic field strengths from two magnetic field sensors in each case and a measured position value is determined for the relative position of the magnet and the measuring location from a variation between the difference quotient and a stored reference difference quotient.

2. Apparatus for measuring the position of a magnet (2) relative to a measuring location (4) provided in the magnetic field of the magnet, the magnet or the measuring location having a predetermined position during the measurement, comprising at least two magnetic field sensor pairs (5, 6, 7, 8) arranged at the measuring location which measure the magnetic field strength in three orthogonal axes (x, y, z), comprising an analysis device (9) attached to the magnetic field sensors of the magnetic field sensor pairs in order to determine the relative position between the magnet and the measuring location from the measurement signals from the magnetic field sensors, wherein the at least two magnetic field sensor pairs (5, 6, 7, 8) are arranged on a circumference of which the centre is the measuring location (4) and forms the common centre of the at least two magnetic field sensor pairs, and the analysis device (9) has a differentiator (14) in order to generate a difference quotient from at least two measured magnetic field strengths from the magnetic field sensors, and wherein the analysis device (9) is configured to generate a measured position value for the relative position of the magnet and the measuring location with respect to a reference position of the magnet from a variation between the difference quotient and a stored reference difference quotient.

3. Use of a method according to claim 1 and an apparatus according to claim 2 in order to control a physical variable depending on the measured position value generated by the method and/or the apparatus, which value provides the relative position of the magnet and the measuring location.

**Revendications**

1. Procédé de mesure de la position, que présente un aimant par rapport à un lieu de mesure agencé dans le champ magnétique de l'aimant, procédé d'après lequel on mesure au niveau du lieu de mesure, les intensités de champ magnétique dans trois axes orthogonaux (x, y, z), au moyen de capteurs de champ magnétique (5, 6, 7, 8) mesurant dans trois dimensions, et l'aimant ou le lieu de mesure présente une position prédéterminée lors de la mesure,
d'après lequel
au niveau du lieu de mesure, on procède respectivement en au moins deux paires de points de mesure, qui sont situées sur une circonférence circulaire, à la mesure des intensités de champ magnétique dans les trois axes orthogonaux, et on traite et exploite les intensités de champ magnétique mesurées pour la détermination de la position de l'aimant par rapport à une position de référence de l'aimant, le lieu de mesure se situe au centre de la circonférence circulaire, et d'après lequel
à partir des valeurs de mesure des intensités de champ magnétique de respectivement deux capteurs de champ magnétique, on forme un quotient de différences des intensités de champ magnétique, et à partir d'un écart du quotient de différences par rapport à un quotient de différences de référence mémorisé, on détermine une valeur de mesure de position pour la position relative de l'aimant et du lieu de mesure.

2. Dispositif de mesure de la position, que présente un aimant (2) par rapport à un lieu de mesure (4) prévu dans le champ magnétique de l'aimant, l'aimant ou le lieu de mesure ayant une position prédéterminée lors de la mesure, le dispositif
comprenant au moins deux paires de capteurs de champ magnétique (5, 6, 7, 8) agencées au niveau du lieu de mesure et mesurant l'intensité de champ magnétique dans trois axes orthogonaux (x, y, z), et comprenant une unité d'exploitation et de traitement de données (9) raccordée aux capteurs de champ magnétique des paires de capteurs de champ magnétique, pour déterminer la position relative entre l'aimant et le lieu de mesure à partir des signaux de mesure des capteurs de champ magnétique, dispositif
dans lequel lesdites au moins deux paires de capteurs de champ magnétique (5, 6, 7, 8) sont agencées sur une circonférence circulaire, dont le centre est le lieu de mesure (4) et forme le centre commun desdites au moins deux paires de capteurs de champ magnétique, et l'unité d'exploitation et de traitement de données (9) comprend un élément de formation de différences (14) pour former un quotient de différences à partir d'au moins deux intensités de champ magnétique mesurées des capteurs de champ magnétique,
et dans lequel l'unité d'exploitation et de traitement de données (9) est conçue pour former une valeur de mesure de position pour la position relative de l'aimant et du lieu de mesure par rapport à une position de référence de l'aimant, à partir d'un écart du quotient de différences par rapport à un quotient de différences de référence mémorisé.

3. Utilisation d'un procédé selon la revendication 1 et d'un dispositif selon la revendication 2 pour commander une grandeur physique en fonction de la valeur de mesure de position, qui est formée à l'aide du procédé et /ou du dispositif, et qui indique la position relative de l'aimant et du lieu de mesure.

_Fig.1_

_Fig.2_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19607199 C2
- US 5694040 A
- US 6304082 B1
- EP 1082619 B1
- US 5622169 A
- US 6129668 A
- US 5762064 A
- US 6385482 B1